# EUROPEAN PATENT SPECIFICATION

(11) **EP 3 645 313 B1**
(45) Date of publication and mention of the grant of the patent: **07.06.2023**
(21) Application number: 18825292.8
(22) Date of filing: 26.03.2018
(51) Int. Cl.: B60C 11/00, B60C 11/14, B60C 11/04

(54) **VEHICLE TIRES**
FAHRZEUGREIFEN
PNEUS DE VÉHICULE

(30) Priority: 25.06.2017 IL 25315117
(43) Date of publication of application: 06.05.2020
(73) Proprietor: Amirav, Elan, Elyakhin 3890800 (IL)
(72) Inventor: Amirav, Elan, Elyakhin 3890800 (IL)
(74) Representative: Zanettin, Gianluigi
(86) International application number: PCT/IL2018/050346
(87) International publication number: WO 2019/003215

(56) References cited:
- JP-A- H04 334 603
- US-A- 4 392 899
- US-A1- 2003 024 622
- US-A1- 2005 072 507
- US-A1- 2013 030 658
- US-A1- 2013 153 082
- US-A1- 2014 020 806
- US-B1- 6 923 233
- UNGUREANU N. et al.: Study on the Development of an Adaptive Tire for Agricultural Trailers, 1 January 2013 (2013-01-01), pages 1-6, XP055655508, Retrieved from the Internet: URL:https://www.researchgate.net/publicati on/283486273_STUDY_ON_THE_DEVELOPMENT_OF_A N_ADAPTIVE_TIRE_FOR_AGRICULTURAL_TRAILERS

## Description

### FIELD OF THE INVENTION

Embodiments of the invention relate to tire.

### BACKGROUND

Monitoring tire pressure and applying the right pressure for a given road condition and driving requirement may save substantially in fuel consumption and tire wear. Therefore it is common in off-road driving, for example, to decrease tire pressure when entering a soft or sandy path and increasing pressure to recommended value when back on paved road. In many cases drivers keep a pump on board for inflating tires after driving on deflated tires. Furthermore, as the awareness to this subject increases, in recent years central systems are available and often installed in heavy vehicles for monitoring and controlling the exact required pressure for a given road condition / driving requirement.

Moreover, the tires are generally being manufactured for one given optimal air pressure. In such cases, under inflation or over inflation typically result in low tire-road contact area.

There is still a need in the art for tires that will effectively facilitate driving in various conditions.

US Patent Application 2003/0024622A1 to Dennis S Chrobak, published 6th February, 2003 teaches a tire design allowing for suitable operational characteristics in all conditions without dependence on pneumatic conditions.

JPh04334603A to Bridgestone Corp published 20th November 1992 reduces noise released outside a tire by restraining noise propagated in the air filled in the tire. The noise propagated in the air in a tire is irregularly reflected and mutually interfered when struck against the inside of the tire waving in the meridional direction. Thus the sound pressure level of noise is lowered and the noise released outwardly is reduced.

The foregoing examples of the related art and limitations related therewith are intended to be illustrative and not exclusive. Other limitations of the related art will become apparent to those of skill in the art upon a reading of the specification and a study of the figures.

### SUMMARY

The invention refers to a multi-purpose tire according to claim 1.

More details and features of the current invention and its embodiments may be found in the description and the attached drawings.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

### BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. It is intended that the embodiments and figures disclosed herein are to be considered illustrative rather than restrictive. The figures are listed below:
Figure 1a schematically depicts a cross section of a prior art tire having a correct inflation pressure and a schematic illustration of the tire's contact with the road at the correct inflation pressure;
Figure 1b schematically depicts a cross section of the tire of Fig. 1a having under-inflation pressure and a schematic illustration of the tire's contact with the road at under-inflation pressure;
Figure 1c schematically depicts a cross section of the tire of Fig. 1a having over-inflation pressure and a schematic illustration of the tire's contact with the road at over-inflation pressure;
Figure 2a schematically depicts a cross section of a tire having low inflation pressure (top) and a schematic illustration of the tire's contact with the road at low inflation pressure (bottom), according to an embodiment of the current invention;
Figure 2b schematically depicts a cross section of the tire of Fig. 2a having medium inflation pressure (top) and a schematic illustration of the tire's contact with the road at medium inflation pressure (bottom), according to an embodiment of the current invention;
Figure 2c schematically depicts a cross section of the tire of Fig. 2a having high inflation pressure (top) and a schematic illustration of the tire's contact with the road at high inflation pressure (bottom), according to an embodiment of the current invention;
Figure 3a schematically depicts a cross section of a tire in a first configuration, according to an embodiment of the current invention;
Figure 3b schematically depicts a cross section of the tire of Fig. 3a in a second configuration, according to an embodiment of the current invention;
Figure 4a schematically depicts a cross section of a tire configured for "off-road" mode (top) and a schematic illustration of the tire's outer surface pattern and contact with the road (bottom), according to an embodiment of the current invention;
Figure 4b schematically depicts a cross section of the tire of Fig. 4a configured for "on-road" mode (top) and a schematic illustration of the tire's outer surface pattern and contact with the road (bottom), according to an embodiment of the current invention;
Figure 4c schematically depicts a cross section of the tire of Fig. 4a configured for "combined" mode (top) and a schematic illustration of the tire's outer surface pattern and contact with the road (bottom), according to an embodiment of the current invention;
Figure 5a schematically depicts a cross section of a tire configured for "snow" mode (top) and a schematic illustration of the tire's outer surface pattern and contact with the road (bottom), according to an embodiment of the current invention;
Figure 5b schematically depicts a cross section of the tire of Fig. 5a configured for "dry" mode (top) and a schematic illustration of the tire's outer surface pattern and contact with the road (bottom), according to an embodiment of the current invention;
Figure 6a schematically depicts a cross sections of a tire having grooves filled with a material different from the surrounding material, at a first inflation pressure, according to embodiments of the current invention;
Figure 6b schematically depicts a cross sections of the tire of Fig. 6a, at a second inflation pressure being lower than the first inflation pressure, according to embodiments of the current invention;
Figure 7a schematically depicts a cross section of a tire having a reinforcing element, according to an embodiment of the current invention;
Figure 7b schematically depicts the reinforcing element of the tire of Fig. 7a, according to an embodiment of the current invention; and
Figure 8 schematically depicts a cross sections of a tire building machine (TBM), according to an embodiment of the current invention.

### DETAILED DESCRIPTION

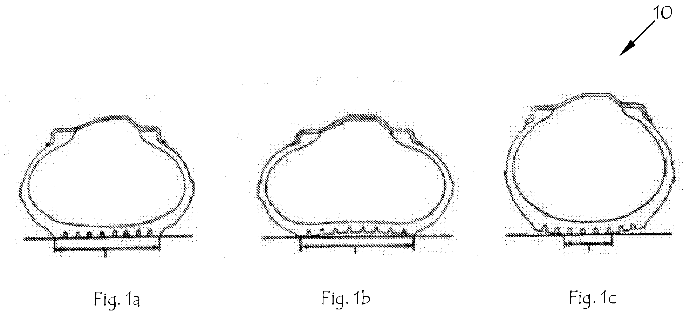

Reference is now made to Figures 1a-c, which schematically depict a cross section of a prior art tire (10) designed for a specific optimal inflation pressure. As shown in Figure 1a, at an optimal inflation pressure the contact of tire 10 with the road is adequate. As shown in Figure 1b, in under-inflation conditions the tread of tire 10 becomes arched and the contact with the road is decreased. As shown in Figure 1c, in over-inflation conditions the tread of tire 10 becomes rounded and the contact with the road is also decreased. Such prior art the tires are being manufactured for one given optimal air pressure. In such cases, when air pressure decreases or increases from a pre-designated value the tire section presents a faulty ground contact and therefore increases tire wear and reduces vehicle performance. As well known, decreased contact with the road due to undesired or unintended changes in inflation pressure may also jeopardize the driving safety and the well-being of the passengers.

One of the reasons for such tire behavior may relate to the tire mass. The pre-designated pressure is designed to press an even layer of mass outwards. When pressure is reduced to a certain level the mass creates an un-even contact to the ground since the mass density is constant.

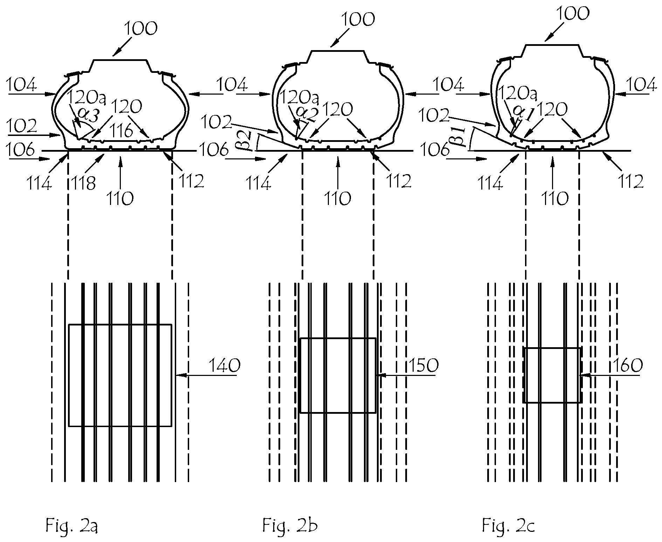

Reference is now made to Figures 2a-c, which schematically depict cross sections of a tire 100 having low (Fig. 1a), medium (Fig. 1b) and high (Fig. 1c) inflation pressure values and their respective tire-road contact areas (bottom), according to an exemplary embodiment of the current invention. According to some embodiments, unlike existing tires, tire 100 is designed for more than one pre-determined pressure values. As will be detailed hereinbelow, in any one of the inflation conditions tire 100 demonstrates a controlled and pre-determined tire-road contact areas.

Tire 100 includes a tread section 102 and a side wall 104. Tread section 102 includes an inner surface 116 and an opposing outer surface 118 designed to contact a road surface 106 in a manner dependent on the inflation pressure of tire 100. Tread section 102 may be divided into three sub-sections (zones): a main (central) tread zone 110 and two auxiliary (side) tread zones 112 and 114. Central tread zone 110 and side tread zones 112 and 114 extend continuously in a circumferential direction of tire 100. Central tread zone 110 is located between side tread zone 112 and side tread zone 114.

Inner surface 116 of tire 100 includes channels 120 extending continuously in a circumferential direction of tire 100. Channels 120 are configured to regulate an inflation-pressure-dependent transition between the tread section configurations of tire 100.

In low inflation pressure conditions (Fig. 2a), the entire outer surface 118 contacts road surface 106. In other words, the outer surfaces of all three zones (central tread zone 110 and side tread zones 112 and 114) contact road surface 106 as can be seen from "tread-print" 140.

In medium inflation pressure conditions (Fig. 2b), only a part of outer surface 118 contacts road surface 106. In other words, the outer surface of central tread zone 110 contacts road surface 106 but the outer surfaces of side tread zones 112 and 114 only partially contact road surface 106, as can be seen from "tread-print" 150, which is smaller than "tread-print" 140.

In high inflation pressure conditions (Fig. 2c), a smaller part of outer surface 118 contacts road surface 106. In other words, only the outer surface of central tread zone 110 contacts road surface 106 while the outer surfaces of side tread zones 112 and 114 are lifted and do not contact road surface 106 at all, as can be seen from "tread-print" 160 which is smaller than "tread-print" 150.

According to some embodiments, this multipurpose tire having inflation-pressure-dependent road grip may be accomplished due to channels 120, which allow tread section 102 to re-shape (e.g., bend) in pre-determined locations using the natural elasticity of the mass and the force applied by the air pressure. As tread section 102 responds to different pressure values according to pre-determined modes, tire 100 presents more than one designed road surface grip allowing various pre-planned modes of contacts with the ground.

By applying internal grooves or flexible belts to the internal tire section opposing the actual tread in pneumatic tire when the tire is under inflated it still maintains full tread grip with the ground in a given ranges of pressure.

For example, as mentioned above, in low inflation pressure conditions (Fig. 2a), the entire outer surface 118 of tread section 102 is flattened and contacts road surface 106. In such configuration, channel 120a, by way of example, has a wide separation angle (alpha) α1, which facilitates the desired flattening and road contact of tread section 102.

In medium inflation pressure conditions (Fig. 2b), the outer surface of central tread zone 110 contacts road surface 106 but the outer surfaces of side tread zones 112 and 114 only partially contact road surface 106. In such configuration, and again, by way of example, channel 120a has a separation angle narrower than (alpha) α1, now represented by (alpha) α2. The desired bending of tread section 102 allowing the lifting of side tread zone 114 from road surface 106 is facilitated by the narrowing of the separation angle of channel 120a from (alpha) α1 to (alpha) α2. Of course, the same applies for the lifting of side tread zone 114 from road surface 106 (angles not marked).

In high inflation pressure conditions (Fig. 2c), only the outer surface of central tread zone 110 contacts road surface 106 while the outer surfaces of side tread zones 112 and 114 are lifted and do not contact road surface 106 at all. In such configuration, again, by way of example, channel 120a has an even smaller separation angle narrower than (alpha) α2, now represented by (alpha) α3. The desired bending of tread section 102 allowing the lifting of side tread zone 114 from road surface 106 is facilitated by the narrowing of the separation angle of channel 120a from (alpha) α2 to (alpha) α3. Of course, the same applies for the lifting of side tread zone 114 from road surface 106 (angles not marked). According to some embodiments, tire 100 is configured for both "full performance" and "saving" modes, respectively. When tire 100 is inflated with a low inflation pressure (Fig. 2a), the entire outer surface of its tread section (formed from the outer surfaces of central tread zone 110 and side tread zones 112 and 114) contacts road surface 106. When tire 100 if inflated with a high inflation pressure (Fig. 2c), only the outer surfaces of central tread zone 110 contacts road surface 106. Fig. 2c represents a driving mode between "full performance" and "saving" modes. As schematically depicted in the bottom sections of Figs. 2a-c, although the outer surface of central tread zone 110 are similar to the outer surfaces of side tread zones 112 and 114, when only the outer surface of central tread zone 110 contacts the ground tire 100 is adapted for "saving" mode and when the outer surfaces of side tread zones 112 and 114 are also in contact with the ground, the same tire 100 is adapted for better grip of the ground and accordingly for "full performance" driving mode. The transition from "full performance" to "saving" modes and vice versa is inflation-pressure dependent and can be accomplished by channels 120, which can be the same or different and can be grooves, empty grooves or groove filled (or partially filled) with material(s) having different properties than the material forming the groove.

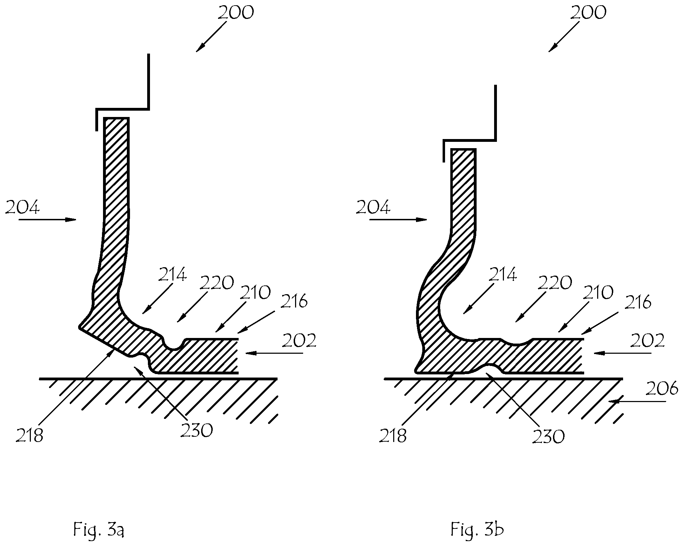

Reference is now made to Figs. 3a-b, which schematically depict cross sections of a tire (part) in a first (high inflation pressure) and a second (low inflation pressure) configurations, respectively, according to an embodiment of the current invention. According to some embodiments, tire 200 (only partially shown) is designed for more than one pre-determined pressure values. Tire 200 includes a tread section 202 and a side wall 204. Tread section 202 includes an inner surface 216 and an opposing outer surface 218 designed to contact the road surface 206 in a manner dependent on the inflation pressure of tire 200. Tread section 202 may be divided into three sub-sections (zones): a main (central) tread zone 210 and two auxiliary (side) tread zones. Only one side tread zone 114 is shown in this figure. Central tread zone 210 and side tread zone 114 extend continuously in a circumferential direction of tire 200. Central tread zone 210 is located between the two side tread zones.

Inner surface 216 of tire 200 includes channel 220 extending continuously in a circumferential direction of tire 200. Outer surface 218 of tire 200 also include a channel 230 (for example, extending continuously in a circumferential direction of tire 200). It is noted that more channels, such as channels 220 and 230, may be present but not shown herein for the purpose of simplicity. Channels 220 and 230 are (slightly) shifted with respect to one another creating a "joint" structure facilitating a bent between central tread zone 210 and side tread zone 114 allowing side zone 114 to lift from road surface 206 when inflation pressure increases (Fig. 3a). This structure provides a multipurpose tire adapted to more than one vehicle operation/driving modes and/or road conditions.

It is noted that although only two or three tread configurations are presented herein, embodiments of this invention are also directed to a larger number of tread configurations such as about 2-7, 3-10, 5-15, more than about 10, etc. According to some embodiments, the tread structure and/or composition may be configured to facilitate a pressure driven transition between multiple tread configurations. The transition may be continuous.

Road (ground) contact of the outer surfaces of the two side zones can be regulated (e.g., increased or reduced) by different pressure applied to the tire. The operator can thus use the vehicle for different functions using the same set of tires.

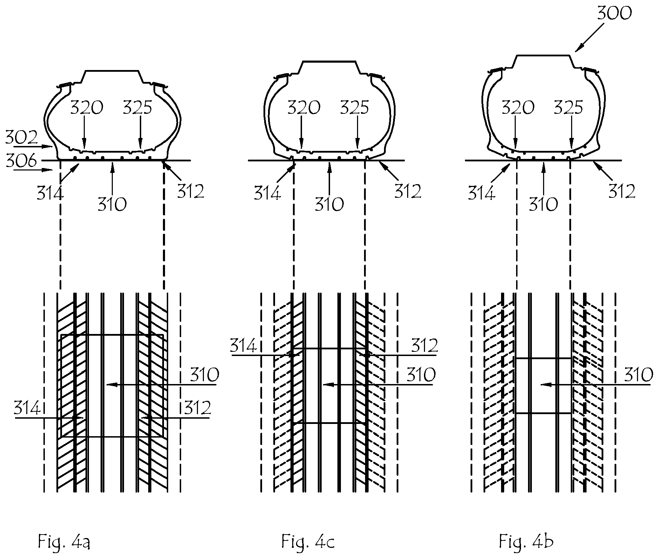

According to some embodiments, the outer surface of the side zones may be designed for use on dirt roads while the central zone may be designed for paved road allowing the vehicle to perform all-road service using the same set of tires. When higher pressure applied the side zones are lifted from the ground (as, for example, in Fig. 2c) and the vehicle is in paved road driving mode. When air pressure is reduced the side zones designed for better ground grip are in contact with the ground (as, for example, in Fig. 2a) and the vehicle is in off-road driving mode. Reference is now made to Figures 4a-c, which schematically depicts a cross section of a tire 300 configured for "off-road", "on-road" and "combined" modes, respectively. Tread section 302 of tire 300 has two types of outer surfaces for contacting road 306: central tread zone 310 has an outer surface pattern configured for "on-road" driving and side tread zones 312 and 314 having an outer surface pattern configured for "off-road" driving. Of course, more than two outer surface pattern are possible, for example, 2-5, 3-7 etc. When tire 300 if inflated with a low inflation pressure (Fig. 4a), the entire outer surface of its tread section (formed from the outer surfaces of central tread zone 310 and side tread zones 312 and 314) contacts road surface 306. When tire 300 is inflated with a high inflation pressure (Fig. 4a), only the outer surfaces of central tread zone 310 contacts road surface 306. As schematically depicted in the bottom sections of Figs. 4a-c, the outer surface of central tread zone 310 is adapted for "on-road" driving mode, while the outer surfaces of side tread zones 312 and 314 are adapted for "off-road". Therefore, when only the outer surface of central tread zone 310 contacts the ground tire 300 is adapted for "on-road" driving mode and when the outer surfaces of side tread zones 312 and 314 are also in contact with the ground, the same tire 300 is adapted for "off-road". When (as shown in Fig. 4c) the outer surface of central tread zone 310 contacts the ground tire 300 and the outer surfaces of side tread zones 312 and 314 are partially in contact with the ground, the same tire 300 is adapted for "combined" mode, which may be used in a semi-paved road for example.

The transition from "on-road" to "combined" and to "off-road" and vice versa is inflation-pressure dependent and can be accomplished by structures 320 and 325, which can be the same or different and can be, as non-limiting examples, grooves.

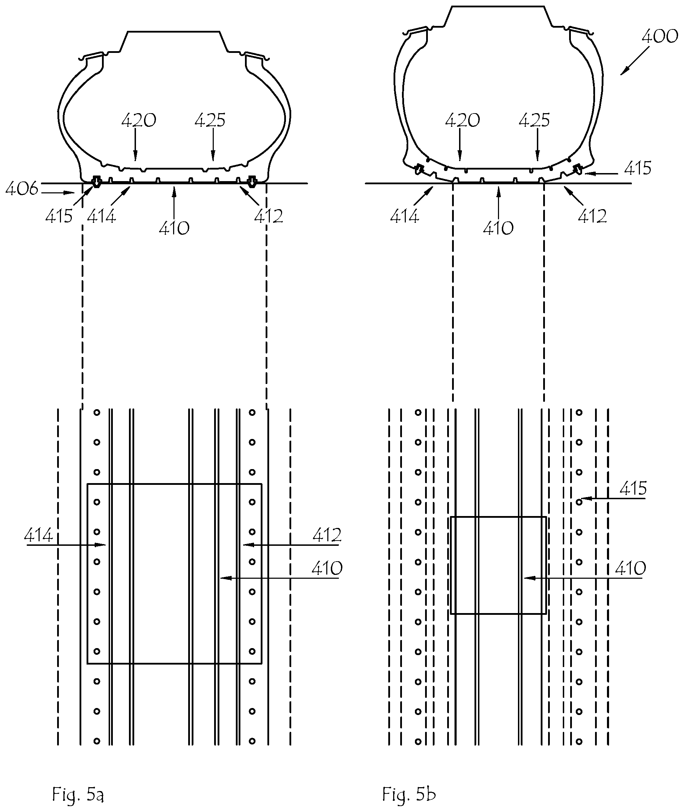

According to some embodiments, the outer surface of the side zones may be equipped with metal studs designated for snow conditions while the central zone designed for dry road conditions. When higher pressure applied the side zones are lifted from the ground and the vehicle is in dry road driving mode. When air pressure reduced the side zones with snow studs are in contact with the ground and the vehicle is in snow driving mode. Reference is now made to Figures 5a-b, which schematically depicts a cross section of a tire 400 configured for both "snow" and "dry" modes, respectively. When tire 400 is inflated with a low inflation pressure (Fig. 5a), the entire outer surface of its tread section (formed from the outer surfaces of central tread zone 410 and side tread zones 412 and 414) contacts road surface 406. When tire 400 is inflated with a high inflation pressure (Fig. 5a), only the outer surfaces of central tread zone 410 contacts road surface 406. As schematically depicted in the bottom sections of Figs. 5a-b, the outer surface of central tread zone 410 is adapted for "dry" driving mode, while the outer surfaces of side tread zones 412 and 414 are adapted for "snow" driving mode. The outer surfaces of side tread zones 412 and 414 may also include studs (spikes or barbs) 415 to facilitate grip in snowy roads. Therefore, when only the outer surface of central tread zone 410 contacts the ground tire 400 is adapted for "dry" driving mode and when the outer surfaces of side tread zones 412 and 414 are also in contact with the ground, the same tire 400 is adapted for driving in the snow. The transition from "snow" to "dry" and vice versa is inflation-pressure dependent and can be accomplished by structures 420 and 425, which may be, as non-limiting examples, grooves. According to some embodiments, structures 420 may be the same as structures 425. According to some embodiments, structures 420 may be different from structures 425.

According to some embodiments, the outer surface of the side zones may be designed for high speed drive while the central zone designed for standard economy drive. When higher pressure applied the side zones are lifted from the ground and the vehicle is in economy driving mode fit for slow speed in city roads for example. When air pressure reduced the side zones are in contact with the ground and the vehicle is in high speed driving mode. According to some embodiments, the outer surface of the side zones may be equipped with metal studs designated for snow conditions while the central zone designed for dry road conditions. When higher pressure applied the side zones are lifted from the ground and the vehicle is in dry road driving mode. When air pressure reduced the side zones with snow studs are in contact with the ground and the vehicle is in snow driving mode.

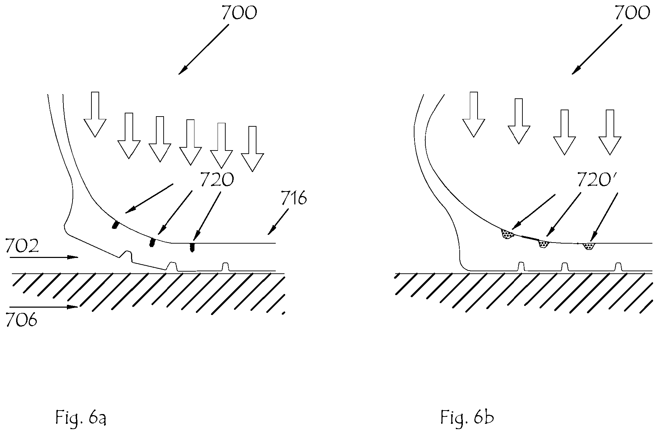

Reference is now made to Figures 6a-b, which schematically depict a cross sections of a tire 700 having grooves 720/720' in an inner surface 716 of a tread section 702 thereof. Grooves 720 are filled with a material different (e.g., more elastic or more compressible) than the surrounding material of inner surface 716. This material allows narrowing/widening of the grooves depending on the inflation pressure in tire 700. By way of example, Fig. 6a depicts grooves 720 at a first inflation pressure, while Fig. 6b depicts grooves 720' at a second inflation pressure being lower than the first inflation pressure (as depicted by the hollow arrows), according to embodiments of the current invention. When inflation pressure increases (shifting from the low pressure depicted Fig. 6b to the higher pressure depicted Fig. 6a) the filing material of the grooves is flexible (or compressible) enough that it allows the grooves to narrow (from configuration 720' to 720), and vice versa. As a result, tread section 102 is lifted from a road surface 706 in a desired manner dependent on the inflation pressure of tire 700.

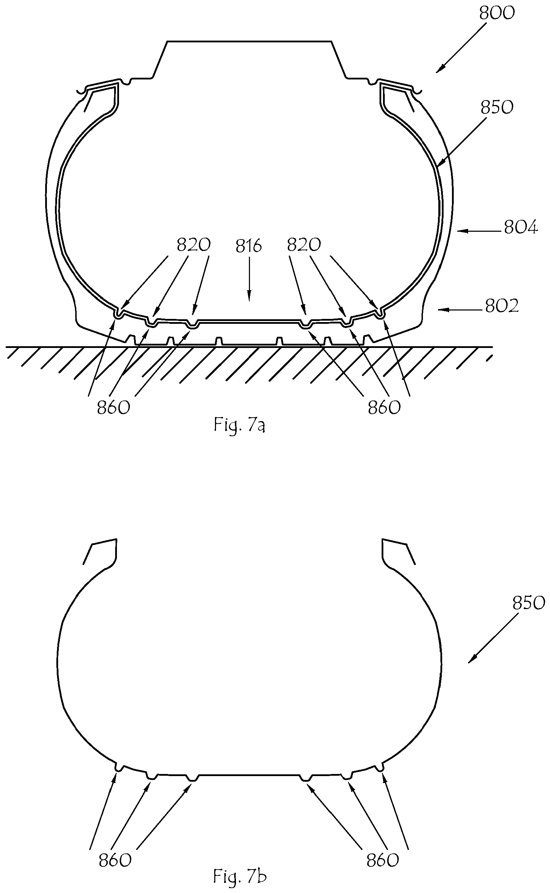

In heavy vehicles, such as trucks, for example, the side zones may be designed for increased loads while the central zone designed for unloaded drive. When higher pressure applied the side zones are lifted from the ground and the truck is in light weight driving mode. When air pressure reduced the side zones are in contact with the ground and the truck is in full load driving mode. In addition, in heavy vehicles, such as trucks, steel cords are typically incorporated into the tire as reinforcing elements. These cords run radially (from the tire beads) down the side wall and all the way around the tire. A truck typically has about 1200 cords in a tire. The steel cords and the tire rubber allow combination of strength and flexibility and thus help absorbing shock from uneven road surfaces. When used in tires, according to some embodiments of the current invention, the radial (steel) cords may be made to assume the indentations which may be compatible to the tire circumferential grooves. Reference is now made to Fig. 7a, which schematically depicts a cross section of a tire 800 having a reinforcing element 850, according to an embodiment of the current invention. Fig. 7b schematically depicts reinforcing element 850 of tire 800 of Fig. 7a, according to an embodiment of the current invention. Reinforcing element 850 is a cord (typically a metal, such as steel cord, configured to run radially down side wall 804 and all the way around tire 800. Reinforcing element 850 incudes indentations 860 (may also be referred to as bent or curved sections), which are configured to fit circumferential grooves 820 located in an inner surface 816 of a tread section 802 of tire 800. Reinforcing element 850 is essentially perpendicular to grooves (channels) 820.

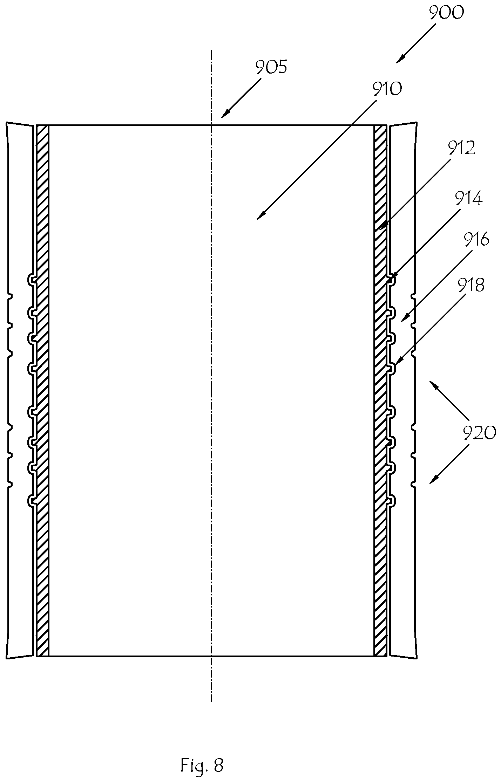

Tire building process typically includes assembling all the tire components onto a tire building drum. Tire-building machines (TBM) can be manually operated or partially/fully automatic. Typical TBM operations include the first-stage operation, where inner liner, body plies, and sidewalls are wrapped around the drum, the beads are placed, and the assembly turned up over the bead. In the second stage operation, the carcass of the tire is inflated, then the belt package and tread are applied. According to some embodiments of the invention, the tire building drum (e.g. a rotating drum) includes one or more bulges at preselected location(s). therefore applying one or more layer of tire production material (for example an inner liner on the drum will result in a tire having a set of circumferential channel in an inner tread section thereof, at location(s) corresponding to the location(s) of the bulges on the drum. Reference is now made to Figure 8, which schematically depicts a cross sections of a tire building machine (TBM) 900, according to an embodiment of the current invention. TBM 900 includes a drum 910. During tire manufacturing, drum 910 may rotate around a longitudinal axis 905 thereof. An outer surface 912 of drum 910 includes a set of bulges, such as bulge 914. During tire manufacturing, the tire plies 916 are laid on outer surface 912 of drum 910 such that grooves (channels/recesses) such as groove 918 are formed around the bulges (such as bulge 914). As the manufacturing process advances, the tire section that includes the grooves is formed to be a tread section of the tire, having grooves at an inner section thereof.

According of some embodiments, the term "high inflation pressure" may include an inflation pressure of about 30-40psi (207-276 kPa; for example, 33-35psi, 34-36psi, 32-37psi, etc.). According of some embodiments, the term "medium inflation pressure" may include an inflation pressure of about 20-30psi (138-207 kPa; for example, 20-25psi, 22-27psi, 25-28-37psi, etc.). According of some embodiments, the term "low inflation pressure" may include an inflation pressure of about 12-20 (83-138 kPa; for example, 13-15, 14-16psi, 15-17psi, 15-19psi, etc.).

According of some embodiments, the "tread section" includes two opposing surfaces: an outer surface, designed to contact the road, an inner surface opposing to the outer surface and any layer that may be disposed between the two surfaces. According of some embodiments, the term "inner surface" of the tread section may include an inner liner, an under-tread layer, a cap plie, a belt (e.g., rubber, still, nylon or any other belt), carcass or any other layer or combination of layers.

According of some embodiments, the "tread section" does not include the tire's side walls.

According of some embodiments, the terms "channel(s)" and "groove(s)" may be used interchangeably.

## Claims

1. A multi-purpose tire comprising:
a tread section (102, 702, 802) comprising a main tread zone (110, 210, 310, 410) and at least one auxiliary tread zone (112, 114, 212, 214, 312, 314, 412, 414),
the tread section (102, 702, 802)being configured to facilitate, at a first inflation pressure, a first tread configuration, wherein the at least one auxiliary tread zone (112, 114, 212, 214, 312, 314, 412, 414) contacts a road surface (106, 206, 306, 706) and, at a second inflation pressure, a second tread configuration, wherein a contact of the at least one auxiliary tread zone (112, 114, 212, 214, 312, 314, 412, 414) with the road is prevented or reduced, the first inflation pressure being lower than the second inflation pressure, wherein the tread section (102, 702, 802) further comprises, in an inner surface thereof, one or more channels (120) extending continuously in a circumferential direction of the tire, the one or more circumferential channels (120) being configured to regulate an inflation-pressure-dependent transition between the first and second tread configurations, **characterized in that** the main tread zone (110, 210, 310, 410) comprises first radially outer surface characteristics and the at least one auxiliary tread zone (112, 114, 212, 214, 312, 314, 412, 414) comprises second outer surface characteristics being different from the first outer surface characteristics.

2. The tire of claim 1, wherein the one or more channels (120) form a joint structure facilitating the transition between the first and second tread configurations.

3. The tire of claim 1, wherein the one or more channels (120) at least partially contain a substance having elasticity higher than the elasticity of the inner surface.

4. The tire of claim 1, wherein the one or more channels (120) at least partially contain a substance having compressibility higher than the compressibility of the inner surface.

5. The tire of claim 1, wherein the main tread zone (110, 210, 310, 410) is a central zone and the at least one auxiliary tread zone (112, 114, 212, 214, 312, 314, 412, 414) comprises two side auxiliary zones located on both sides of the main tread zone (110, 210, 310, 410).

6. The tire of claim 1, wherein the first configuration facilitates full load driving mode and wherein the second configuration facilitates light weight driving mode.

7. The tire of claim 1, wherein the main tread zone (110) comprises a first radially outer surface pattern and the at least one auxiliary tread zone comprises a second radially outer surface pattern being different from the first radially outer surface pattern.

8. The tire of claim 7, wherein the first radially outer surface pattern is configured to facilitate driving on a paved road and wherein the second radially outer surface pattern is configured to facilitate driving on "off road" conditions.

9. The tire of claim 7, wherein the first radially outer surface pattern is configured to facilitate driving on an essentially dry road and wherein the second radially outer surface pattern is configured to facilitate driving on wet, icy and/or snow covered road.

10. The tire of claim 1, wherein the second radially outer surface (118) comprises studs (415) configured to facilitate driving on icy and/or snow covered road.

11. The tire of claim 1, wherein the second tread configuration facilitates economy driving mode and the first tread configuration facilitates high speed driving mode.

12. The tire of claim 1, further comprises one or more reinforcing elements (850) extending radially from the tire beads, along the side wall and around the tire, the one or more reinforcing elements being essentially perpendicular to the one or more circumferential channels(120), wherein the one or more reinforcing elements (850) comprise indentations at locations fitting the one or more circumferential channels.

13. The tire of claim 12, wherein the one or more reinforcing elements comprise one or more metal cords.

14. The tire of claim 12, wherein the tire production material comprises an inner liner, body plies or a combination thereof, wherein the one or more circumferential channels (120) are formed at least on the inner liner.

## Patentansprüche

1. Mehrzweckreifen, umfassend:
einen Laufflächenabschnitt (102, 702, 802), welcher einen Hauptlaufflächenbereich (110, 210, 310, 410) und wenigstens einen Hilfslaufflächenbereich (112, 114, 212, 214, 312, 314, 412, 414) umfasst,
wobei der Laufflächenabschnitt (102, 702, 802) dazu eingerichtet ist, bei einem ersten Fülldruck eine erste Laufflächenkonfiguration, wobei der wenigstens eine Hilfslaufflächenbereich (112, 114, 212, 214, 312, 314, 412, 414) eine Straßenoberfläche (106, 206, 306, 706) kontaktiert, und bei einem zweiten Fülldruck eine zweite Laufflächenkonfiguration zu erleichtern, wobei ein Kontakt des wenigstens einen Hilfslaufflächenbereichs (112, 114, 212, 214, 312, 314, 412, 414) mit der Straße verhindert oder reduziert ist, wobei der erste Fülldruck niedriger ist als der zweite Fülldruck, wobei der Laufflächenabschnitt (102, 702, 802) in einer inneren Fläche davon ferner einen oder mehrere Kanäle (120) umfasst, welche sich kontinuierlich in einer Umfangsrichtung des Reifens erstrecken, wobei der eine oder die mehreren Umfangskanäle (120) dazu eingerichtet sind, einen Fülldruck-abhängigen Übergang zwischen der ersten und der zweiten Laufflächenkonfiguration zu regulieren,
**dadurch gekennzeichnet, dass** der Hauptlaufflächenbereich (110, 210, 310, 410) erste, radial äußere Oberflächenmerkmale umfasst und der wenigstens eine Hilfslaufflächenbereich (112, 114, 212, 214, 312, 314, 412, 414) zweite, äußere Oberflächenmerkmale umfasst, welche von den ersten, äußeren Oberflächenmerkmalen verschieden sind.

2. Reifen nach Anspruch 1, wobei der eine oder die mehreren Kanäle (120) eine gemeinsame Struktur bilden, welche den Übergang zwischen der ersten und der zweiten Laufflächenkonfiguration erleichtert.

3. Reifen nach Anspruch 1, wobei der eine oder die mehreren Kanäle (120) wenigstens teilweise eine Substanz enthalten, welche eine Elastizität aufweist, die höher ist als die Elastizität der inneren Fläche.

4. Reifen nach Anspruch 1, wobei der eine oder die mehreren Kanäle (120) wenigstens teilweise eine Substanz enthalten, welche eine Komprimierbarkeit aufweist, die höher ist als die Komprimierbarkeit der inneren Fläche.

5. Reifen nach Anspruch 1, wobei der Hauptlaufflächenbereich (110, 210, 310, 410) ein zentraler Bereich ist und der wenigstens eine Hilfslaufflächenbereich (112, 114, 212, 214, 312, 314, 412, 414) zwei seitliche Hilfsbereiche umfasst, welche an beiden Seiten des Hauptlaufflächenbereichs (110, 210, 310, 410) angeordnet sind.

6. Reifen nach Anspruch 1, wobei die erste Konfiguration einen Volllast-Fahrmodus erleichtert und wobei die zweite Konfiguration einen Leichtgewicht-Fahrmodus erleichtert.

7. Reifen nach Anspruch 1, wobei der Hauptlaufflächenbereich (110) ein erstes, radial äußeres Oberflächenmuster umfasst und der wenigstens eine Hilfslaufflächenbereich ein zweites, radial äußeres Oberflächenmuster umfasst, welches von dem ersten, radial äußeren Oberflächenmuster verschieden ist.

8. Reifen nach Anspruch 7, wobei das erste, radial äußere Oberflächenmuster dazu eingerichtet ist, ein Fahren auf einer gepflasterten Straße zu erleichtern, und wobei das zweite, radial äußere Oberflächenmuster dazu eingerichtet ist, ein Fahren bei "Off Road"-Bedingungen zu erleichtern.

9. Reifen nach Anspruch 7, wobei das erste, radial äußere Oberflächenmuster dazu eingerichtet ist, ein Fahren auf einer im Wesentlichen trockenen Straße zu erleichtern, und wobei das zweite, radial äußere Oberflächenmuster dazu eingerichtet ist, ein Fahren auf einer nassen, eisigen und/oder schneebedeckten Straße zu erleichtern.

10. Reifen nach Anspruch 1, wobei die zweite, radial äußere Oberfläche (118) Spikes (415) umfasst, welche dazu eingerichtet sind, ein Fahren auf einer eisigen und/oder schneebedeckten Straße zu erleichtern.

11. Reifen nach Anspruch 1, wobei die zweite Laufflächenkonfiguration einen ökonomischen Fahrmodus erleichtert und die erste Laufflächenkonfiguration einen Hochgeschwindigkeitsfahrmodus erleichtert.

12. Reifen nach Anspruch 1, ferner umfassend ein oder mehrere Verstärkungselemente (850), welche sich radial von den Reifenwülsten, entlang der Seitenwand und um den Reifen herum erstrecken, wobei das eine oder die mehreren Verstärkungselemente im Wesentlichen senkrecht zu dem einen oder den mehreren Umfangskanälen (120) sind, wobei das eine oder die mehreren Verstärkungselemente (850) Vertiefungen an Stellen umfassen, welche zu dem einen oder den mehreren Umfangskanälen passen.

13. Reifen nach Anspruch 12, wobei das eine oder die mehreren Verstärkungselemente einen oder mehrere Metallstränge umfassen.

14. Reifen nach Anspruch 12, wobei das Reifenproduktionsmaterial eine Innenschicht, Unterbaulagen oder eine Kombination davon umfasst, wobei der eine oder die mehreren Umfangskanäle (120) wenigstens an der Innenschicht gebildet sind.

## Revendications

1. Pneumatique polyvalent comprenant :
une section de bande de roulement (102, 702, 802) comprenant une zone de bande de roulement principale (110, 210, 310, 410) et au moins une zone de bande de roulement auxiliaire (112, 114, 212, 214, 312, 314, 412, 414),
la section de bande de roulement (102, 702, 802) étant configurée pour faciliter, à une première pression de gonflage, une première configuration de bande de roulement, ladite au moins une zone de bande de roulement auxiliaire (112, 114, 212, 214, 312, 314, 412, 414) entrant en contact avec une surface de route (106, 206, 306, 706) et, à une seconde pression de gonflage, une seconde configuration de bande de roulement, un contact de ladite au moins une zone de bande de roulement auxiliaire (112, 114, 212, 214, 312, 314 , 412, 414) avec la route étant empêché ou réduit, la première pression de gonflage étant inférieure à la seconde pression de gonflage, la section de bande de roulement (102, 702, 802) comprenant en outre, dans une surface intérieure de celle-ci, un ou plusieurs canaux (120) s'étendant de manière continue dans une direction circonférentielle du pneumatique, lesdits un ou plusieurs canaux circonférentiels (120) étant configurés pour réguler une transition dépendant de la pression de gonflage entre les première et seconde configurations de bande de roulement, **caractérisé en ce que** la zone de bande de roulement principale (110, 210, 310, 410) comprend des premières caractéristiques de surface radialement extérieure et ladite au moins une zone de bande de roulement auxiliaire (112, 114, 212, 214, 312, 314, 412, 414) comprend des secondes caractéristiques de surface extérieure différentes des premières caractéristiques de surface extérieure.

2. Pneumatique selon la revendication 1, lesdits un ou plusieurs canaux (120) formant une structure de joint facilitant la transition entre les première et seconde configurations de bande de roulement.

3. Pneumatique selon la revendication 1, lesdits un ou plusieurs canaux (120) contenant au moins partiellement une substance ayant une élasticité supérieure à l'élasticité de la surface intérieure.

4. Pneumatique selon la revendication 1, lesdits un ou plusieurs canaux (120) contenant au moins partiellement une substance ayant une compressibilité supérieure à la compressibilité de la surface intérieure.

5. Pneumatique selon la revendication 1, la zone de bande de roulement principale (110, 210, 310, 410) étant une zone centrale et ladite au moins une zone de bande de roulement auxiliaire (112, 114, 212, 214, 312, 314, 412, 414) comprenant deux zones auxiliaires latérales situées des deux côtés de la zone de bande de roulement principale (110, 210, 310, 410).

6. Pneumatique selon la revendication 1, la première configuration facilitant le mode de conduite à pleine charge et la seconde configuration facilitant le mode de conduite léger.

7. Pneumatique selon la revendication 1, la zone de bande de roulement principale (110) comprenant un premier motif de surface radialement extérieure et ladite au moins une zone de bande de roulement auxiliaire comprenant un second motif de surface radialement extérieure différent du premier motif de surface radialement extérieure.

8. Pneumatique selon la revendication 7, le premier motif de surface radialement extérieure étant configuré pour faciliter la conduite sur une route goudronnée et le second motif de surface radialement extérieure étant configuré pour faciliter la conduite dans des conditions hors route.

9. Pneumatique selon la revendication 7, le premier motif de surface radialement extérieure étant configuré pour faciliter la conduite sur une route sensiblement sèche et le second motif de surface radialement extérieure étant configuré pour faciliter la conduite sur route mouillée, verglacée et/ou enneigée.

10. Pneumatique selon la revendication 1, la seconde surface radialement extérieure (118) comprenant des crampons (415) configurés pour faciliter la conduite sur route verglacée et/ou enneigée.

11. Pneumatique selon la revendication 1, la seconde configuration de bande de roulement facilitant le mode de conduite économique et la première configuration de bande de roulement facilitant le mode de conduite à grande vitesse.

12. Pneumatique selon la revendication 1, comprenant en outre un ou plusieurs éléments de renforcement (850) s'étendant radialement depuis les talons du pneumatique, le long de la paroi latérale et autour du pneumatique, lesdits uns ou plusieurs éléments de renforcement étant sensiblement perpendiculaires auxdits un ou plusieurs canaux circonférentiels (120), lesdits un ou plusieurs éléments de renforcement (850) comprenant des indentations à des emplacements s'adaptant auxdits un ou plusieurs canaux circonférentiels.

13. Pneumatique selon la revendication 12, lesdits un ou plusieurs éléments de renforcement comprenant un ou plusieurs câbles métalliques.

14. Pneumatique selon la revendication 12, le matériau de production de pneumatique comprenant une doublure intérieure, des plis de corps ou une combinaison de ceux-ci, lesdits un ou plusieurs canaux circonférentiels (120) étant formés au moins sur la doublure intérieure.
